# EUROPÄISCHE PATENTSCHRIFT

(11) **EP 3 487 055 B1**
(45) Veröffentlichungstag und Bekanntmachung des Hinweises auf die Patenterteilung: **11.10.2023**
(21) Anmeldenummer: 18205633.3
(22) Anmeldetag: 12.11.2018
(51) Int. Cl.: H02M 3/155, H02M 1/42, H02M 1/00

(54) **HILFSSPANNUNGSVERSORGUNG**
AUXILIARY POWER SUPPLY
ALIMENTATION EN TENSION AUXILIAIRE

(30) Priorität: 20.11.2017 DE 102017220663
(43) Veröffentlichungstag der Anmeldung: 22.05.2019
(73) Patentinhaber: Inventronics GmbH, 85748 Garching b. München (DE)
(72) Erfinder: Schmitt, Harald, 80689 München (DE)
(74) Vertreter: Novagraaf Group

(56) Entgegenhaltungen:
- EP-A2- 0 859 453
- EP-A2- 1 376 844
- JP-A- H0 686 542
- JP-A- H1 014 224
- US-A1- 2009 190 379
- US-A1- 2017 222 573

## Beschreibung

Die Erfindung betrifft eine Hilfsspannungsversorgung in einem Gleichspannungswandler, insbesondere in einem Vorschaltgerät zur Ansteuerung von Lampen und/oder Leuchtdioden.

In elektrischen Vorschaltgeräten (auch bezeichnet als Betriebsgeräte) wird für die Versorgung von ASICs oder Mikrocontrollern eine Hilfsspannungsversorgung benötigt.

Eine solche Hilfsspannung kann mittels einer Zusatzwicklung auf der mindestens einen Induktivität eines jeden solchen Gleichspannungswandlers ausgekoppelt werden. Dazu dient die aus dem Stand der Technik her bekannte rein kapazitive Ladungspumpe. Die Rückladediode ist dabei oft identisch mit dem Element, das die Höhe der gewonnenen Hilfsspannung begrenzt. Die Rückladediode ist oft als eine doppelt genutzte Zenerdiode ausgeführt, die in Flussrichtung einen in Serie angeordneten Pumpkondensator zurücklädt. Eine solche in Sperrrichtung betriebene Zenerdiode bestimmt so eine Spannung auf einen Wert etwas oberhalb des gewünschten Hilfsspannungswertes. Hat das Nutzsignal, das als Wechselspannung über der Zusatzwicklung abgegriffen wird, einen weiten Spannungs- und Frequenzbereich, kann diese Technik jedoch nur für einen Teil des Spannungs- und Frequenzbereichs angewendet werden. So ist für die Hilfsspannung einerseits eine Mindestmenge an Ladung pro Zeiteinheit bereitzustellen (eine Untergrenze für die Leistung der Hilfsspannungsversorgung tritt bei einer niedrigen Frequenz und bei einer niedrigen Spannung des Nutzsignals auf, auf diese Grenze ist die Ladungspumpe auszulegen), andererseits können die spannungsbegrenzenden Bauteile wie beispielsweise die Zenerdiode ohne Beschädigung nur eine bestimmte vorgegebene maximale Verlustleistung aushalten. Eine solche Verlustleistung entspricht in bekannten Lösungen nachteilig dem eigentlich erwünschten Leistungsüberschuss der Ladungspumpe. Dies begrenzt den nutzbaren Bereich in Bezug auf die Höhe der Frequenz und die Höhe der Spannung des Nutzsignals.

Die Energie für die Hilfsspannungsversorgung wird mittels des Pumpkondensators aus einer Zusatzwicklung auf der mindestens einen Induktivität jedes Gleichspannungswandlers (auch bezeichnet als Konverter) ausgekoppelt. Bekannte Gleichspannungswandler sind z.B.: Boost-, Flyback-, SEPIC-, Cuk-Wandler.

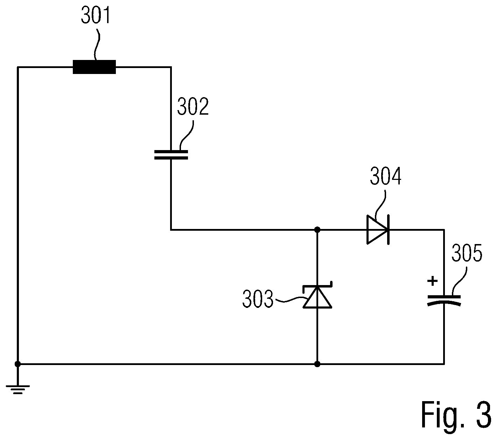

**Fig.3** zeigt eine beispielhafte Realisierung zur Erzeugung einer Hilfsspannung mittels einer Induktivität 301 nach dem Stand der Technik. Die ausgekoppelte Ladung wird über eine Pumpdiode 304 von einem Pumpkondensator 302 in einen Speicherkondensator 305 geleitet und steht als geglättete Hilfsspannung zum Betrieb weiterer Komponenten zur Verfügung. Die Glättung entsteht einzig durch den Speicherkondensator 305 und durch dessen Entkopplung durch die Pumpdiode 304. Wird die Nutzspannung z.B. aus der Induktivität eines SEPIC-Wandlers entnommen, kann sich dieses Versorgungssignal, abhängig vom Ausgangsstrom, der Ausgangsspannung und der Eingangsspannung, in einem Frequenzbereich von 30kHz bis 230kHz (dies entspricht einem Faktor von ca. 8) und einem Spannungsbereich von 20V bis 50V (dies entspricht einem Faktor von ca. 2,5) bewegen. Dieser Bereich kann ohne hohe Verluste oder ohne Beschädigung der üblichen spannungsbegrenzenden Bauteile nicht abgedeckt werden.

Daher haben bekannte Lösungen das Problem eines eingeschränkten Nutzungsbereichs in Bezug auf die Arbeitspunkte von Gleichspannungswandlern zur Erzeugung von Hilfsspannungen.

EP 1 231 821 B1 offenbart die Verbindung seines Eingangs direkt mit dem Spannungszwischenkreis des Haupt-Gleichspannungswandlers.

Die EP 0 859 453 A2 offenbart eine Hilfsspannungsversorgung für eine Steuerschaltung mit einem Resonanzglied aus einer Induktivität und einer Kapazität. Eine besondere Eignung für einen weiten Frequenz- und/oder Spannungsbereich eines Nutzsignals ist dort nicht offenbart.

Die JP H1014224 A offenbart eine Hilfsspannungsversorgung für eine Steuerschaltung mit einem Resonanzglied aus einer ersten und zweiten Kapazität und einer Induktivität. Eine besondere Eignung für einen weiten Frequenz- und/oder Spannungsbereich eines Nutzsignals ist dort nicht offenbart.

Die **Aufgabe** der Erfindung besteht darin, die vorstehend genannten Nachteile zu vermeiden und insbesondere eine Hilfsspannungsversorgung bereitzustellen, die für einen weiten Frequenz- und/oder Spannungsbereich eines Nutzsignals effizient verwendet werden kann.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird eine Schaltung angegeben für eine Hilfsspannungsversorgung in einem getakteten Gleichspannungswandler mit einem weiten Frequenz- und/oder Spannungsbereich seines Nutzsignals,
- einen Eingang zum Eingeben eines Versorgungssignals, welches als Wechselspannung zwischen einem induktiven Abgriff an der Wandlerinduktivität des Gleichspannungswandlers und einem Bezugspotential mittels eines Pumpkondensators auskoppelbar ist,
- eine Ladungspumpe, wobei die Ladungspumpe den Pumpkondensator, eine Freilaufdiode, und eine Pumpdiode umfasst, wobei der Pumpkondensator und die Freilaufdiode in Serie und zwischen den induktiven Abgriff und das Bezugspotential geschaltet sind, wobei die Pumpdiode mit einem Knotenpunkt zwischen dem Pumpkondensator und der Freilaufdiode gekoppelt ist,
- einen Ausgang mit einem Speicherkondensator zum Ausgeben der Hilfsspannung, wobei der Speicherkondensator zur Speicherung der Hilfsspannung parallel zum Ausgang geschaltet ist, und die Hilfsspannung zwischen dem Ausgangsknotenpunkt und dem Bezugspotential anliegt,
- ein spannungsbegrenzendes Element, welches parallel zum Speicherkondensator geschaltet ist, zum Begrenzen der Hilfsspannung in ihrer Höhe,
- eine weitere Induktivität, welche zwischen den Knotenpunkt von Pumpkondensator und Freilaufdiode sowie die Pumpdiode geschaltet ist, um beim Betrieb des Gleichspannungswandlers den Entladestrom des Pumpkondensators bei hohen Frequenzen zu begrenzen, und das spannungsbegrenzende Element bei hohen Frequenzen zu entlasten.
   - wobei die Ladungspumpe im Zusammenwirken mit der weiteren Induktivität und dem spannungsbegrenzenden Element eingerichtet ist, beim Betrieb des Gleichspannungswandlers einen Entladestrom des Pumpkondensators in den Speicherkondensator zu transferieren..

Es ist eine Weiterbildung, dass der induktive Abgriff eine Hilfswicklung umfasst.

Es ist eine Weiterbildung, dass der Gleichspannungswandler eingerichtet ist, eine netzseitige Leistungsfaktorkorrektur durchzuführen.

Es ist eine Weiterbildung, dass bei niedrigen Frequenzen der Spannung an dem induktiven Abgriff die Freilaufdiode vor der negativen Flanke dieser Spannung leitend wird.

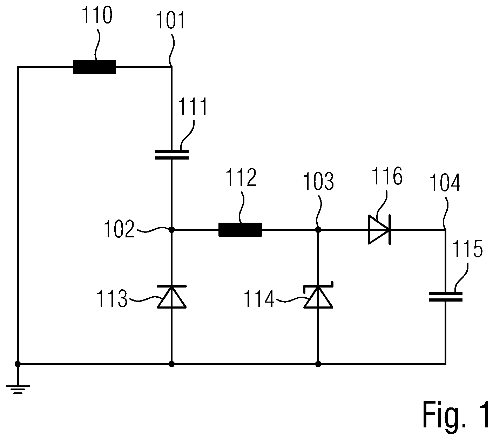

Die Freilaufdiode wird vor der negativen Flanke leitend , wenn beispielsweise der Kondensator 111 aus Fig.1 voll aufgeladen ist, also keinen Strom mehr liefern kann, die Induktivität 112 den Strom aber weiter treibt bis er wieder zu Null wird. Die Induktivität 112 holt sich in diesem Fall den Strom über die Diode 113.

Es ist eine Weiterbildung, dass die niedrigen Frequenzen in einem Bereich von 25 kHz bis 45 kHz liegen.

Es ist eine Weiterbildung, dass bei mittleren Frequenzen der Spannung an dem induktiven Abgriff die Freilaufdiode gleichzeitig oder im Wesentlichen gleichzeitig mit der negativen Flanke der Spannung einschaltet.

In diesem Fall dauert die positive Halbwelle insbesondere so lange, bis der Kondensator vollständig aufgeladen ist.

Es ist eine Weiterbildung, dass die mittleren Frequenzen in einem Bereich von 60 kHz bis 120 kHz liegen.

Es ist eine Weiterbildung, dass bei hohen Frequenzen der Spannung an dem induktiven Abgriff die Freilaufdiode mit der steigenden Flanke der Spannung sperrend wird.

Es ist eine Weiterbildung, dass die hohen Frequenzen in einem Bereich von 150 kHz bis 300 kHz liegen.

Die Schaltung umfasst weiterhin ein spannungsbegrenzendes Element zur Einstellung der Ausgangsspannung.

Es ist eine Weiterbildung, dass das spannungsbegrenzende Element eine Zenerdiode umfasst.

Es ist eine Weiterbildung, dass ein Verhältnis zwischen einer Ausgangsspannung des Gleichspannungswandler zu seiner Eingangsspannung um mehr als 1 zu 2 variiert.

Es ist eine Weiterbildung, dass eine Spannungsübersetzung des Gleichspannungswandlers um mehr als ein Verhältnis von 1 zu 10 variiert.

Es ist eine Weiterbildung, dass die Lastspannung des Gleichspannungswandlers kleiner ist als ein Spitzenwert der Eingangsspannung des Gleichspannungswandlers.

Es ist eine Weiterbildung, dass der Gleichspannungswandler eine SEPIC-Topologie aufweist.

Es ist eine Weiterbildung, dass ein Lastkreis des Gleichspannungswandlers von einem Eingangskreis des Gleichspannungswandlers galvanisch isoliert ist.

Es ist eine Weiterbildung, dass mindestens eine Leuchtdiode als eine Last an den Gleichspannungswandler angeschlossen oder anschließbar ist.

Auch wird ein Gleichspannungswandler vorgeschlagen, der die vorstehend beschriebene Schaltung umfasst.

Ferner wird ein Betriebsgerät für mindestens eine Lampe angegeben, das die vorstehend beschriebene Schaltung umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: ein beispielhaftes Schaltbild zur Erzeugung einer Hilfsspannung;
- Fig.2: ein beispielhaftes Schaltbild mit einem Weitbereichswandler in SEPIC-Form zur Ansteuerung einer Reihe von Leuchtdioden.

Es wird insbesondere eine Lösung vorgeschlagen, die auf effiziente Art eine Hilfsspannungsversorgung über einen weiten Spannungs- und/oder Frequenzbereich eines Nutzsignals (auch bezeichnet als Versorgungssignal) ermöglicht.

Im Falle eines niedrigen Versorgungssignals (niedrige Frequenz und/oder niedrige Spannung) aus der Hilfswicklung wird die gesamte von einem Pumpkondensator auskoppelbare Energie als Hilfsspannung genutzt. Weist das Versorgungsignal eine höhere Frequenz und/oder eine höhere Spannung auf, steigt folglich die auskoppelbare Energie, soll jedoch der Pumpkondensator nicht die gesamte zur Verfügung stehende Energie aus der Hilfswicklung auskoppeln, da dann die überschüssige Energie in spannungsbegrenzenden Bauteilen (z.B. Zenerdioden) vernichtet werden oder mittels eines nachgeschalteten unabhängigen kleinen Wandlers, vorzugsweise eines Tiefsetzstellers oder Buck-Wandlers, auf die Zielspannung umgeformt werden müsste.

**Fig.1** zeigt ein beispielhaftes Schaltbild zur Erzeugung einer Hilfsspannung. Eine Induktivität 110 ist zwischen Masse und einem Knoten 101 angeordnet. Zwischen dem Knoten 101 und einem Knoten 102 ist ein Kondensator 111 vorgesehen. Der Knoten 102 ist über eine Diode 113 mit Masse verbunden, wobei die Kathode der Diode 113 in Richtung des Knotens 102 zeigt. Zwischen dem Knoten 102 und einem Knoten 103 ist eine Induktivität 112 angeordnet. Der Knoten 103 ist über eine Zenerdiode 114 mit Masse verbunden, wobei die Kathode der Zenerdiode 114 in Richtung des Knotens 103 zeigt. Der Knoten 103 ist über eine Diode 116, die die Funktion einer Pumpdiode übernimmt, mit einem Knoten 104 verbunden, wobei die Kathode der Diode 116 zum Knoten 104 zeigt. Der Knoten 104 ist über einen Kondensator 115 (auch bezeichnet als Speicherkondensator) mit Masse verbunden. Der Kondensator 115 ist beispielsweise ein Elektrolytkondensator, dessen positiver Anschluss mit dem Knoten 104 verbunden ist und zugleich den Pluspol der Hilfsspannung darstellt.

Eine beispielhafte Dimensionierung der in Fig.1 gezeigten Bauteile ist wie folgt: Induktivität 110: 10...50µH; Kapazität 111: 4,7nF; Induktivität 112: 2,2mH; Kapazität 115: 4,7µF.

Die Induktivität 110 ist beispielsweise als eine Hilfswicklung einer Wandlerinduktivität ausgeführt und generiert eine Wechselspannung (auch bezeichnet als Versorgungssignal), die eine Quelle für die Hilfsversorgungsspannung darstellt. Der Kondensator 111 entspricht dem Pumpkondensator und koppelt Energie aus der Induktivität 110 aus. Der Strom für die Hilfsversorgung und der Entladestrom des Kondensators 111 fließt durch die Induktivität 112, die die Glättung der Hilfsspannung verbessert. Sind die Mittelwerte beider obiger Ströme (Strom für die Hilfsversorgung und Entladestrom) gleich, fließt kein Strom durch die Zenerdiode 114, und die Hilfsspannungsversorgung arbeitet mit hoher, insbesondere optimaler Effizienz. Dennoch ist für einen stabilen Betrieb der Hilfsspannungsversorgung ein Entladestrommittelwert nötig, der vorzugsweise leicht über dem Strom für die Hilfsversorgung liegt. Daraus ergibt sich, dass auch der Strombedarf der an die Hilfsspannung angeschlossenen mindestens einen weiteren Komponente einen weiteren Randparameter darstellt.

Über die Zenerdiode 114 wird die Spannungsbegrenzung der Hilfsspannung erreicht. Über die Diode 113, die die Rückladediode darstellt, werden der Kondensator 111 (Pumpkondensator) und die Induktivität 112 entladen. Die Induktivität 112 begrenzt den ausgekoppelten Strom bei hohen Frequenzen und ermöglicht somit die Reduzierung der von dem Kondensator 111 bereitgestellten Energie bei diesen hohen Frequenzen.

Fig.1 veranschaulicht ein Beispiel, bei dem in einem Zweig nach dem Kondensator 111 die Induktivität 112 eingefügt wird. Weiterhin ist die Diode 113 als Freilaufdiode mit Flussrichtung vom Bezugspotenzial oder von der Masse der Schaltung zum Knoten 102 vorgesehen. Dadurch werden die Funktionen des spannungsbegrenzenden Bauteils, hier der Zenerdiode 114, nämlich Rückladen des Pumpkondensators 111 in Flussrichtung und Begrenzen der Hilfsspannung in Sperrrichtung, voneinander entkoppelt. Dies bewirkt vorteilhaft bereits eine weitere Verlustreduktion in der Zenerdiode 114: Sie wird von der Führung des Rückladestroms entlastet. Die diesen Strom übernehmende neue Rückladediode 113 erhält aufgrund der Induktivität 112 die Funktion einer Freilaufdiode.

Da während der positiven Halbwelle des Versorgungssignals der Ladestrom des Kondensators 111 über die Induktivität 112 fließt, kann diese Induktivität 112 so dimensioniert werden, dass bis zu einer bestimmten Frequenz und/oder Spannung der Ladestrom den Kondensator 111 vollständig aufladen kann. Dann ist der Strom in der Induktivität 112 spätestens am Ende dieser positiven Halbwelle gerade zu null geworden und bleibt null während der gesamten negativen Halbwelle des Versorgungssignals, da dann die Induktivität durch die beiden sie einrahmenden Dioden 113 und 116 von der Wandlungsaktivität entkoppelt ist.

Bereits während der positiven Halbwelle des Versorgungssignals kann die Diode 113 leitend werden und die Phase konstanter Stromabnahme in der Induktivität 112 beginnen aufgrund der dann konstanten Gegenspannung. Da in dieser Phase zumindest auch die Diode 116 leitet, entspricht diese Gegenspannung der in dem Speicherkondensator 115 gerade gepufferten Hilfsspannung vergrößert um die zwei Diodenflußspannungen.

In einem sogenannten Standardbetrieb fließt ein "lückender" Strom (d.h. ein Strom mit zeitlichen Unterbrechungen) durch die Induktivität 112, wodurch verhindert wird, dass sich der Strom in der Induktivität 112 aufintegriert. Da dieser lückende Strom zusätzlich Energie in der Induktivität 112 speichert, was sich an einer höheren Ladung des Kondensators 111 in dieser Phase zeigt, kann diese Energie während der negativen Halbwelle des Nutzsignals zusätzlich aus dem Kondensator 111 herausfließen. Entsprechend kann der Kondensator 111 (besagter Pumpkondensator oder "Auskoppelkondensator") deutlich kleiner dimensioniert sein als im Stand der Technik, was wiederum für sich genommen bereits eine Verkleinerung der Abhängigkeiten der ausgekoppelten Energie von der Frequenz oder von der Spannung des Versorgungssignals bewirkt.

Im Gegensatz zu bekannten Lösungen kann der Kondensator 111 mit der in Fig.1 gezeigten Schaltung nicht nur auf den Wert der Differenz zwischen dem Versorgungsspannungssprung und der Zielspannung aufgeladen werden, sondern sogar auf den vollen Wert des Versorgungsspannungssprungs. Dieser Versorgungsspannungssprung entspricht der Spannungsdifferenz zwischen maximaler positiver und maximaler negativer Spannung des Versorgungssignals über besagter Hilfswicklung. Die Zielspannung entspricht dem gewünschten Wert der bereitzustellenden Hilfsspannung. Da zwischen besagter Hilfswicklung und der sie ermöglichenden Hauptwicklung der mindestens einen Induktivität eines jeden Gleichspannungswandlers ein Windungsverhältnis von vorteilhafterweise deutlich kleiner eins bestehen kann, kann dieser Versorgungsspannungssprung besonders vorteilhaft auf das Doppelte bis Dreifache der gewünschten Hilfsspannung eingestellt werden. Je kleiner der Versorgungsspannungssprung eingestellt ist, desto stärker wirkt obiger Vorteil der Umladung des Kondensators 111 um den vollen Versorgungsspannungssprung, denn der Spitzenwert dieses Sprungs wirkt quadratisch auf die auskoppelbare Energie ein. Bei einem beispielsweise dreifach überhöhten Versorgungsspannungssprung ergibt sich dieser Vorteil zu 3:2, was quadriert einem Vorteil von 9:4 entspricht. Im Umkehrschluss kann der Kondensator 111 also weniger als halb so groß sein wie das entsprechende Bauteil aus dem Stand der Technik.

Erhöht sich die Frequenz des Versorgungssignals, reicht die Zeit seiner positiven Halbwelle nicht mehr aus, um den Kondensator 111 vollständig aufzuladen. In diesem Fall schaltet die Diode 113 gleichzeitig mit der fallenden Flanke des Versorgungssignals ein (und nicht bereits vorher). Dadurch wird der Überschuss der entnommenen Energie über das oben bereits Beschriebene hinaus weiter begrenzt und muss nicht mehr in spannungsbegrenzenden Bauteilen wie bspw. in der Zenerdiode 114 vernichtet werden. Während der negativen Halbwelle des Versorgungssignals versiegt jedoch der Strom durch die Induktivität 112 und lückt somit - abnehmend mit weiter zunehmender Frequenz - nur noch vor Beginn der positiven Halbwelle des Nutzsignals.

Der kritische Leitmodus (CRM) tritt tatsächlich immer nur an einem Punkt ein, der sogar innerhalb einer Netzperiode mehrmals getroffen oder überschritten werden kann. Die Drossel treibt den Strom weiter, sie will sich ja entladen, der Strom für dieses Entladen kommt aus der Diode 113. Um die Energie für die Spannungsbegrenzung zu limitieren, wurde der Kondensator auf ca. die Hälfte der im Stand der Technik verwendeten Kapazität reduziert.

Neben dem vorstehend erläuterten Standardbetrieb gibt es bei noch höheren Frequenzen einen sogenannten erweiterten Betrieb ("extended mode"), in dem der Strom in der Induktivität 112 gar keine Unterbrechungen mehr aufweist sondern kontinuierlich anliegt. Dies wird auch als kontinuierlicher Leitmodus (CCM, Continuous Conduction Mode) bezeichnet. Wie oben erläutert, verschwindet die Stromlücke (d.h. die Unterbrechung des Stroms) vor der positiven Halbwelle des Versorgungssignals durch eine weitere Frequenzerhöhung. Dieser kontinuierliche Strom durch die Induktivität 112 bleibt stabil, weil der Serienresonanzkreis aus Kondensator 111 und Induktivität 112 bei den betrachteten Frequenzen bereits als Tiefpass wirkt. Weiterhin bleibt der kontinuierliche Strom durch die Induktivität 112 stabil, weil der spannungsmäßig am stärksten oszillierende Punkt dieses Schwingkreises der Knoten 102 in seiner Mitte ist, an dem die Freilaufdiode 113 bei hinreichender Spannungsamplitude periodisch Strom abzapfen kann, den Schwingkreis also zusätzlich dämpfen kann, dies sogar nichtlinear und somit besonders wirksam.

Wird die Serienschaltung aus 111 und 112 als Resonanzkreis interpretiert, ist fraglich, was bei den tieferen Frequenzen geschieht, bei denen eigentlich sein Resonanzpunkt liegt. Nun wird tatsächlich die Resonanzkatastrophe dadurch vermieden, dass die zum Schwingen eines Serienkreises nötige Spannungsumgebung durch die Diode 116 periodisch aufgebrochen wird, so dass an dem "springendem" Knoten 102 die Freilaufdiode 113 eingreift und ebenso periodisch Energie absaugt, und dass schließlich die Zenerdiode 114 wenn nötig kontinuierlich Energie absaugt. Die Serienresonanz als solche wird bildlich gesehen zerhackt. Bei den eingangs beschriebenen ganz tiefen Frequenzen arbeitet dieser Serienresonanzkreis also im gutmütigen kapazitiven Bereich.

Beispielsweise kann der Auskoppelkondensator 111 so dimensioniert werden, dass im Fall des kleinsten Versorgungssignals die Schaltung bei 198VAC Eingangsspannung noch starten kann. Durch eine entsprechende Dimensionierung der Induktivität 112 ist es möglich, die Temperatur an der Zenerdiode 114 im Fall des größtmöglichen Versorgungssignals um ca. 100K zu reduzieren und somit auf ein übliches Temperaturniveau zu bringen. Somit kann sichergestellt werden, dass auch im Fall des größtmöglichen Versorgungssignals die Bauteile nicht zerstört werden.

Ein weiterer Vorteil besteht darin, dass die Kapazität des Auskoppelkondensators 111 gegenüber herkömmlichen Schaltungen in etwa halbiert werden kann.

Die hier verwendete Wandlertopologie kann einen hochsetzenden Gleichspannungswandler (Hochsetzer, Hochsetzsteller) oder einen tiefsetzenden Gleichspannungswandler (Tiefsetzer, Tiefsetzsteller) umfassen. Darüber hinaus oder unter Berücksichtigung der vorstehend angegebenen Wandler kann mindestens einer der folgenden Wandler im Zusammenhang mit der hier beschriebenen Lösung eingesetzt werden: ein SEPIC-Wandler, ein Battery-Boost-Wandler, ein Buck-Boost-Wandler, ein Flyback-Wandler, ein Cuk-Wandler oder ein Zeta-Wandler.

Diesen sechs vorstehend angegebenen Wandlertopologien ist gemeinsam, dass die Spannungssprünge an ihrer charakteristischen Induktivität (auch bezeichnet als Wandlerinduktivität), an die die besagte Hilfswicklung gekoppelt ist, proportional zur Summe aus Ein- und Ausgangsspannung des Hauptwandlers ist.

Insoweit hängt die Amplitude des Versorgungssignals auch von der Ausgangsspannung ab, die beim Betrieb von beispielsweise verschiedenen LED-Lasten deutlich variieren kann.

Bei den genannten Wandlertopologien hängt die von ihnen übertragene Leistung in einem zumeist vorkommenden diskontinuierlichen Leitmodus (DCM, Discontinuous Conduction Mode) oder einem sogenannten kritischen Leitmodus (CRM, Critical Conduction Mode) nicht nur von einem Tastverhältnis des Ansteuersignals des aktiven Leistungsschalters ab, sondern auch von dessen Frequenz. Beispielsweise können derartige Frequenzen in einem Bereich zwischen 30 kHz und 200 kHz liegen.

Die hier vorgeschlagene Lösung kann vorteilhaft in Weitbereichs-PFC-Schaltungen eingesetzt werden, deren Hauptwandler ein Hochsetzsteller ist. Da eine weitreichende Variation der Versorgungsspannung möglich sein soll, ergibt sich auch ein weitreichender Frequenzhub im PFC-Betrieb.

Entsprechendes gilt auch für einen Tiefsetzsteller, der einen großen Lastspannungsbereich aufweist. Beispielsweise kann bei geringer Differenzspannung und damit hoher Ausgangsspannung der Tiefsetzsteller mit hoher Frequenz in dem CCM betrieben werden. Andererseits kann bei zunehmend niedriger Ausgangsspannung die Frequenz drastisch reduziert und der Tiefsetzsteller in den energieeffizienteren Modi CRM bzw. DCM betrieben werden.

Somit ist der hier vorgeschlagene Ansatz insbesondere von Vorteil, wenn eine Wandlertopologie erforderlich ist (z.B. als ein Hauptwandler in einer Schaltung), die einen weiten Bereich (von Spannung und/oder Frequenz) abdecken soll (ein derartiger Wandler wird hier auch als Weitbereichswandler bezeichnet).

Insbesondere umfasst ein Ausführungsbeispiel einen Hauptwandler, dem die Gleichricht- und Ausgangsstufe eines Tiefsetzstellers zugeordnet ist. Dadurch kann eine kleine Hilfsspannung mit hoher Grundgenauigkeit erzeugt werden. Die Eingangsspannung und der nachfolgende Schalter, die eine Eingangsstufe des herkömmlichen Tiefsetzstellers darstellen, sind dabei durch die Hilfswicklung (Induktivität 110) und den Auskoppelkondensator (Kondensator 111) ersetzt. Dadurch arbeiten in diesem Ausführungsbeispiel der Hauptwandler und die Hilfsspannungsversorgung immer mit derselben Frequenz. Der Kondensator 111 in Zusammenwirkung mit der Induktivität 112 ermöglicht jedoch, dass die Hilfsspannungsversorgung mit einem vom Hauptwandler abweichenden Tastverhältnis arbeitet.

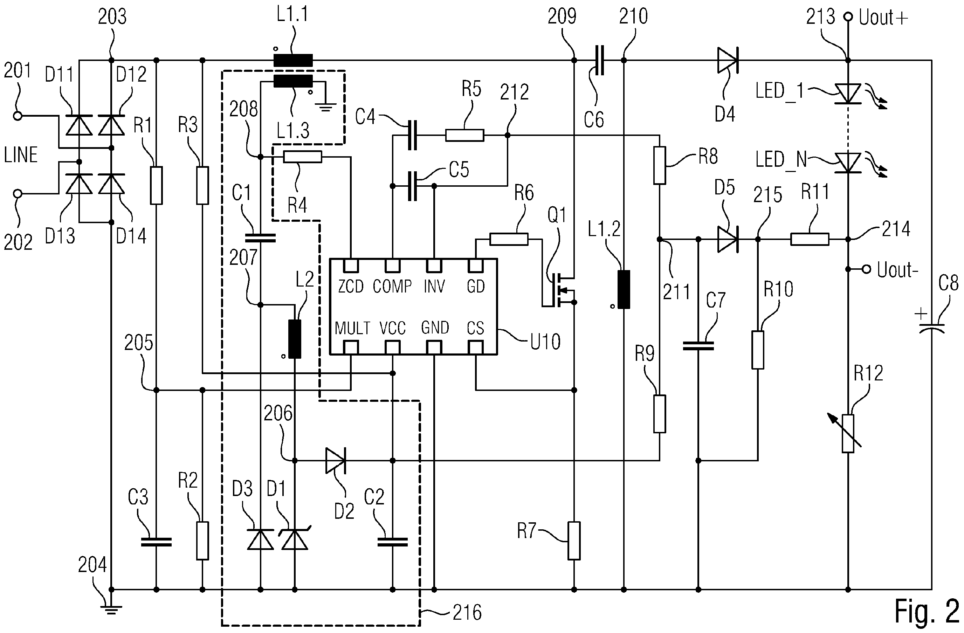

**Fig.2** zeigt ein beispielhaftes Schaltbild mit einem Weitbereichswandler zur Ansteuerung einer Reihe von Leuchtdioden. Hier als Einzelbauteile dargestellte Widerstände können bei hoher Spannungsbeanspruchung beispielsweise auch als eine Serienschaltung aus mehreren Widerständen realisiert sein, bei hoher Strombeanspruchung als Parallelschaltung. Letzteres ist auch bei Kondensatoren möglich.

Eine Eingangsspannung (Wechselspannung) liegt an den Anschlüssen 201 und 202 an. Die Dioden D11 bis D14 stellen eine Brückengleichrichter dar, anhand dessen an Knoten 203 und 204 (Masse) eine Gleichspannung anliegt.

Um die erforderliche elektromagnetische Verträglichkeit (EMV) zu gewährleisten, kann ein Eingangsfilter links des Brückengleichrichters vorgesehen sein.

Der Knoten 203 ist über einen Widerstand R1 mit einem Knoten 205 verbunden. Der Knoten 205 ist über einen Kondensator C3 mit Masse verbunden. Parallel zu dem Kondensator C3 ist ein Widerstand R2 angeordnet. Der Knoten 205 ist mit dem Anschluss MULT eines Controllers U10 verbunden.

Der Controller U10 ist ein integrierter Schaltkreis (IC) vom Typ L6562. Eine Beschreibung dieses ICs findet sich beispielsweise unter http://www.st.com/content/ccc/resource/technical/document/datasheet/d6/25/e6/ab/9b/2 2/4e/ca/CD00003316.pdf/files/CD00003316.pdf/jcr:content/translations/en.CD0000331 6.pdf.

Der Knoten 203 ist über einen Widerstand R3 mit dem Eingang VCC des Controllers U10 verbunden. Der Eingang VCC des Controllers U10 ist über einen Kondensator C2 mit Masse verbunden. Der Eingang VCC des Controllers U10 ist über eine Diode D2 mit einem Knoten 206 verbunden, wobei die Anode der Diode D2 in Richtung des Knotens 206 zeigt. Der Knoten 206 ist über eine Zenerdiode D1 mit Masse verbunden, wobei die Kathode der Zenerdiode D1 in Richtung des Knotens 206 zeigt. Der Knoten 206 ist über eine Induktivität L2 mit einem Knoten 207 verbunden.

Der Knoten 207 ist über eine Diode D3, deren Kathode in Richtung des Knotens 207 zeigt, mit Masse verbunden. Der Knoten 207 ist über einen Kondensator C1 mit einem Knoten 208 verbunden. Der Knoten 208 ist über einen Widerstand R4 mit dem Anschluss ZCD des Controllers U10 verbunden. Der Knoten 208 ist über eine Induktivität L1.3 mit Masse verbunden.

Der Knoten 203 ist über eine Induktivität L 1.1 mit einem Knoten 209 verbunden.

Der Anschluss VCC des Controllers U10 ist weiterhin über einen Widerstand R9 mit einem Knoten 211 verbunden. Der Knoten 211 ist über einen Widerstand R8 mit einem Knoten 212 verbunden. Der Knoten 212 ist mit dem Anschluss INV des Controllers U10 verbunden. Der Knoten 212 ist über eine Reihenschaltung umfassend einen Widerstand R5 und einen Kondensator C4 mit dem Anschluss COMP des Controllers U10 verbunden. Zwischen dem Anschluss COMP und dem Anschluss INV des Controllers U10 ist ein Kondensator C5 angeordnet.

Der Anschluss GD des Controllers U10 ist über einen Widerstand R6 mit dem Gate-Anschluss eines n-Kanal MOSFETs Q1 verbunden. Der Source-Anschluss des MOSFETs Q1 ist mit dem Anschluss CS des Controllers U10 verbunden. Der Anschluss CS des Controllers U10 ist über einen Widerstand R7 mit Masse verbunden. Der Anschluss GND des Controllers U10 ist mit Masse verbunden. Der Drain-Anschluss des MOSFETs Q1 ist mit dem Knoten 209 verbunden.

Der Koten 209 ist über einen Kondensator C6 mit einem Knoten 210 verbunden. Zwischen dem Knoten 210 und Masse ist eine Induktivität L1.2 angeordnet. Aus beidem ist ersichtlich, dass es sich bei dem hier beispielsweise dargestellten Weitbereichswandler um einen SEPIC handelt.

Der Knoten 210 ist über eine Diode D4, deren Anode in Richtung des Knotens 210 zeigt, mit einem Knoten 213 verbunden. An dem Knoten 213 wird ein Ausgangssignal Uout+ bereitgestellt. Zwischen dem Knoten 213 und einem Knoten 214 ist eine Kette von N in Reihe geschalteten Leuchtdioden LED_1 bis LED_N angeordnet. An dem Knoten 214 wird ein Ausgangssignal Uout- bereitgestellt. Der Knoten 214 ist über einen veränderbaren Widerstand R12 mit Masse verbunden. Weiterhin ist der Knoten 213 mit Masse über einen Kondensator C8 verbunden, der vorzugsweise als ein Elektrolytkondensator ausgeführt sein kann.

Der Knoten 211 ist über eine Diode D5, deren Anode in Richtung des Knotens 211 zeigt, mit einem Knoten 215 verbunden. Der Knoten 215 ist über einen Widerstand R1 1 mit dem Knoten 214 verbunden.

Der Knoten 215 ist über einen Widerstand R10 mit Masse verbunden. Der Knoten 211 ist über einen Kondensator C7 mit Masse verbunden.

Die Widerstände R1, R2 und der Kondensator C3 dienen der Beschaltung des Controllers U10, um den Klirrfaktor (TDH, Total Harmonic Distortion) zu verbessern.

Der Widerstand R3 dient zum Laden des Kondensators C1 (auf die Spannung VCC während einer Startphase). Im Betrieb übernimmt die Teilschaltung 216, die der Hilfsspannungsversorgung entspricht, die Ladung des Kondensators C1 (der Ladungsverbrauch ist während des Betriebs höher als während der Startphase).

Die Kondensatoren C4, C5 sowie der Widerstand R5 dienen der Beschaltung des in dem Controller U10 integrierten Operationsverstärkers zur Regelung.

Die Induktivitäten L1.1, L1.2, der Kondensator C6, die Diode D4, der MOSFET Q1, die Widerstände R6, R7 und der Kondensator C8 stellen die Topologie des SEPIC-Wandlers mit dem beiden Hauptwicklungen L1.1 und L1.2, dem Hauptschalter Q1, dem Gatewiderstand R6, dem Shuntwiderstand R7, der SEPIC-Freilaufdiode D4, dem SEPIC-Kondensator C6 und dem Speicherkondensator C8 dar.

Die Widerstände R8 bis R12 und die Diode D5 dienen einer Strom-Istwert-Bestimmung und einer Zuführung dieses Strom-Istwerts an den Regeleingang INV des Controllers U10.

Der Controller U10 (IC L6562) ist ein Übergangsmodus-PFC-Controller (Transition-Mode PFC Controller). Der Controller U10 berechnet intern (analog) einen Pegel, der an dem Anschluss CS (Current Sense) erreicht werden muss. Dazu schaltet der Controller U10 den MOSFET Q1 über den Anschluss GD (Gate Drive) ein, es fließt ein Strom über die Induktivität L1.1 und den MOSFET Q1 durch den Widerstand R7 (Shuntwiderstand), bis der errechnete Pegel an dem Anschluss CS erreicht ist (dreieckförmiger Strom). Dann wird der MOSFET Q1 wieder ausgeschaltet.

Die Induktivität L1 treibt dann den Strom weiter durch die Diode D4 in den Speicherkondensator C8. Nimmt der Strom bis auf null ab, wird dies über die Induktivität L1.3 durch einen Sprung in der Spannung angezeigt und über den Anschluss ZCD (Zero Current Detection, "Nullstromerkennung") detektiert. Jetzt wird der MOSEFT Q1 wieder eingeschaltet und der Vorgang wiederholt sich.

Der Pegel an dem Anschluss CS wird von mehreren Faktoren beeinflusst: Als erstes versucht der Controller U10 den Istwert an dem Anschluss INV an den internen Sollwert anzupassen (z.B. ist ein Sollwert von 2,5V vorgegeben). Ist der Istwert zu niedrig, wird der Wert an dem Anschluss CS erhöht und umgekehrt. Damit das nicht sprunghaft geschieht wird der Operationsverstärker des Controllers U10 zwischen den Anschlüssen INV und COMP mit Widerstands- und RC-Gliedern beschaltet. Zusätzlich wird der Anschluss MULT genutzt, um Korrekturwerte anzulegen und somit eine verbesserte Netzstromaufnahme (THD) zu ermöglichen.

Die hier gezeigte Schaltung gewährleistet einen weiten Betriebsbereich (Spannung und Strom). Dies wird dargestellt durch den veränderbaren Widerstand R12. Ist der Widerstand R12 groß, wird der Sollspannungspegel an dem Anschluss INV schon bei kleinen Strömen erreicht und umgekehrt. Die verschiedenen Ausgangsspannungen werden durch die unterschiedliche Anzahl der N Leuchtdioden LED_1 bis LED_N realisiert. Der große Betriebsbereich hat zur Folge, dass an dem Anschluss CS unterschiedliche Werte anliegen können und damit die Zeit, wie lange der MOSFET Q1 angeschaltet ist, variiert. Beispielsweise kann eine solche Einschaltzeit um den Faktor acht variieren. Auch beeinflusst die Ausgangspannung die Zeit, wie lange die Entladung (Entmagnetisierung) der Induktivität L1.3 dauert, also bis die Nullstromerkennung an dem Anschluss ZCD erkannt wird.

Somit bildet sich der große Betriebsfrequenzbereich und in Teilen auch noch die Ausgangspannung der Schaltung in der Induktivität L1.3 ab. Die Induktivität L1.3 stellt die Funktion der Nullstromerkennung sowie die Spannungsversorgung der Schaltung zur Verfügung, entspricht also der das Versorgungssignal tragenden Hilfswicklung 110 aus Fig.1.

Hierbei sei angemerkt, dass für die hier erläuterte Funktionalität beispielhaft der SEPIC-Wandler angeführt wurde. Entsprechend können wie vorstehend erwähnt auch andere Wandlertopologien verwendet werden. Obwohl der SEPIC-Wandler von den Sperrwandlern abstammt, kann die gleichgerichtete Netzspannung mittels der Induktivität L1.2 und dem Kondensator C6 auch verringert werden.

Die Induktivität L1.1 und die Induktivität L1.3 stellen einen Übertrager dar. Die Induktivität L1.2 ist eine zweite Hauptwicklung auf der Primärseite zusammen mit der Induktivität L1.1, ihr Windungsverhältnis zu der Induktivität L1.1 ist beispielsweise eins. Die Induktivität L1.3 ist die Hilfswicklung zur Erzeugung der Hilfsspannung zum Betrieb der PFC-Regelung, also die Hilfswicklung 110 aus Fig.1 mit deutlich weniger Windungen als die Induktivität L1.1 respektive die Induktivität L1.2. Die Induktivität L2 entspricht der Induktivität 112 aus Fig.1.

Obwohl die Erfindung im Detail durch das mindestens eine gezeigte Ausführungsbeispiel näher illustriert und beschrieben wurde, so ist die Erfindung nicht darauf eingeschränkt, und andere Variationen können vom Fachmann hieraus abgeleitet werden, ohne den Schutzumfang der Erfindung zu verlassen.

### Bezugszeichenliste

- 101: Knoten
- 102: Knoten
- 103: Knoten
- 104: Knoten
- 110: Induktivität (Hilfsinduktivität)
- 111: Kondensator
- 112: Induktivität
- 113: Diode
- 114: Zenerdiode
- 115: Kondensator
- 116: Diode

- 201: Anschluss (Wechselspannung)
- 202: Anschluss (Wechselspannung)
- 203: Knoten
- 204: Knoten
- 205: Knoten
- 206: Knoten
- 207: Knoten
- 208: Knoten
- 209: Knoten
- 210: Knoten
- 211: Knoten
- 212: Knoten
- 213: Knoten
- 214: Knoten
- 215: Knoten
- 216: Teilschaltung
- D1: Zenerdiode
- D2 bis D5: Diode
- D11 bis D14: Brückengleichrichter
- LED_1 bis LED_N: Leuchtdiode
- R1 bis R11: Widerstand
- R12: veränderbarer Widerstand
- C1 bis C7: Kondensator
- C8: Elektrolytkondensator
- L1.1: Induktivität
- L1.2: Induktivität
- L1.3: Induktivität
- L2: Induktivität
- Q1: n-Kanal MOSFET
- U10: IC L6562, Transition-Mode PFC Controller
- Uout+: Ausgangsspannung, positiver Anschluss
- Uout-: Ausgangsspannung, negativer Anschluss
- 301: Induktivität
- 302: Kondensator
- 303: Zener-Diode
- 304: Diode
- 305: Elektrolytkondensator

## Patentansprüche

1. Schaltung zur Generierung einer Hilfsspannung in einem getakteten Gleichspannungswandler mit einem weiten Frequenz- und/oder Spannungsbereich seines Nutzsignals, aufweisend:
- einen Eingang (101, Masse) zum Eingeben eines Versorgungssignals, welches als Wechselspannung zwischen einem induktiven Abgriff (110) an der Wandlerinduktivität des Gleichspannungswandlers und einem Bezugspotential mittels eines Pumpkondensators (111) auskoppelbar ist,
- eine Ladungspumpe, wobei die Ladungspumpe den Pumpkondensator (111), eine Freilaufdiode (113), und eine Pumpdiode (116) umfasst, wobei der Pumpkondensator (111) und die Freilaufdiode (113) in Serie geschaltet sind und zwischen den induktiven Abgriff (110) und das Bezugspotential schaltbar sind, wobei
die Pumpdiode (116) mit einem Knotenpunkt (102) zwischen dem Pumpkondensator (111) und der Freilaufdiode (113) gekoppelt ist,
- einen Ausgang (104, Masse) mit einem Speicherkondensator (115) zum Ausgeben der Hilfsspannung, wobei der Speicherkondensator (115) zur Speicherung der Hilfsspannung parallel zum Ausgang geschaltet ist, und die Hilfsspannung im Einsatz zwischen dem Ausgangsknotenpunkt (104) und dem Bezugspotential anliegt,
- ein spannungsbegrenzendes Element (114), welches parallel zum Speicherkondensator geschaltet ist, zum Begrenzen der Hilfsspannung in ihrer Höhe,
- eine weitere Induktivität (112), welche zwischen den Knotenpunkt (102) von Pumpkondensator (111) und Freilaufdiode (113) sowie die Pumpdiode (116) geschaltet ist, um beim Betrieb des Gleichspannungswandlers den Entladestrom des Pumpkondensators (111) bei hohen Frequenzen zu begrenzen, und das spannungsbegrenzende Element (114) bei hohen Frequenzen zu entlasten.
wobei die Ladungspumpe im Zusammenwirken mit der weiteren Induktivität (112) und dem spannungsbegrenzenden Element (114) eingerichtet ist, beim Betrieb des Gleichspannungswandlers einen Entladestrom des Pumpkondensators (111) in den Speicherkondensator (115) zu transferieren.

2. Schaltung nach Anspruch 1, bei der die Freilaufdiode (113) vor der negativen Flanke des Versorgungssignals leitend wird, wenn dieses Versorgungssignal eine niedrige Frequenz aufweist.

3. Schaltung nach Anspruch 2, bei der die niedrigen Frequenzen in einem Bereich von 25 kHz bis 45 kHz liegen.

4. Schaltung nach einem der vorhergehenden Ansprüche 1 bis 3, bei der bei mittleren Frequenzen des Versorgungssignals die Freilaufdiode (113) gleichzeitig oder im Wesentlichen gleichzeitig mit der negativen Flanke der Versorgungssignals einschaltet.

5. Schaltung nach Anspruch 4, bei der die mittleren Frequenzen in einem Bereich von 60 kHz bis 120 kHz liegen.

6. Schaltung nach einem der vorhergehenden Ansprüche 1 bis 5, bei der bei hohen Frequenzen des Versorgungssignals die Freilaufdiode (113) mit der steigenden Flanke des Versorgungssignals sperrend wird.

7. Schaltung nach Anspruch 6, bei der die hohen Frequenzen in einem Bereich von 150 kHz bis 300 kHz liegen.

8. Schaltung nach Anspruch 1, bei der das spannungsbegrenzende Element(114) eine Zenerdiode umfasst.

9. Gleichspannungswandler umfassend die Schaltung nach einem der vorhergehenden Ansprüche 1 bis 8.

10. Gleichspannungswandler nach Anspruch 9, aufweisend eine Wandlerinduktivität mit einem induktiven Abgriff, **dadurch gekennzeichnet, dass** der induktive Abgriff (110) eine Hilfswicklung umfasst.

11. Gleichspannungswandler nach einem der vorhergehenden Ansprüche, bei der der Gleichspannungswandler eingerichtet ist, eine netzseitige Leistungsfaktorkorrektur durchzuführen.

12. Gleichspannungswandler nach einem der vorhergehenden Ansprüche 9 bis 11, bei der ein Verhältnis zwischen einer Ausgangsspannung des Gleichspannungswandlers zu seiner Eingangsspannung um mehr als 1 zu 2 variiert.

13. Gleichspannungswandler nach einem der vorhergehenden Ansprüche 9 bis 12, bei der eine Spannungsübersetzung des Gleichspannungswandlers um mehr als ein Verhältnis von 1 zu 10 variiert.

14. Gleichspannungswandler nach einem der vorhergehenden Ansprüche 9 bis 13, bei der die Lastspannung des Gleichspannungswandlers kleiner ist als ein Spitzenwert der Eingangsspannung des Gleichspannungswandlers.

15. Gleichspannungswandler nach einem der vorhergehenden Ansprüche 9 bis 14, bei der der Gleichspannungswandler eine SEPIC-Topologie aufweist.

16. Gleichspannungswandler nach einem der vorhergehenden Ansprüche 9 bis 15, bei der ein Lastkreis des Gleichspannungswandlers von einem Eingangskreis des Gleichspannungswandlers galvanisch isoliert ist.

17. Gleichspannungswandler nach einem der vorhergehenden Ansprüche 9 bis 16, bei der mindestens eine Leuchtdiode als eine Last an den Gleichspannungswandler anschließbar ist.

18. Betriebsgerät für mindestens eine Lampe umfassend einen Gleichspannungswandler nach einem der Ansprüche 9 bis 17.

## Claims

1. A circuit for generating an auxiliary voltage in a clocked DC-DC converter having a wide frequency and/or voltage range of its useful signal, comprising:
- an input (101, ground) for inputting a supply signal which can be coupled out as an AC voltage between an inductive tap (110) on the converter inductor of the DC-DC converter and a reference potential by means of a pump capacitor (111),
- a charge pump, the charge pump comprising the pump capacitor (111), a freewheeling diode (113) and a pump diode (116), the pump capacitor (111) and the freewheeling diode (113) being connected in series and being switchable between the inductive tap (110) and the reference potential, the pump diode (116) being coupled to a node (102) between the pump capacitor (111) and the freewheeling diode (113),
- an output (104, ground) having a storage capacitor (115) for outputting the auxiliary voltage, the storage capacitor (115) being connected in parallel to the output for storing the auxiliary voltage, and the auxiliary voltage being applied in use between the output node (104) and the reference potential,
- a voltage-limiting element (114) which is connected in parallel with the storage capacitor for limiting the auxiliary voltage in its magnitude,
- a further inductor (112) which is connected between the node (102) of the pump capacitor (111) and freewheeling diode (113) and the pump diode (116) in order to limit the discharge current of the pump capacitor (111) at high frequencies during operation of the DC-DC converter, and to relieve the voltage-limiting element (114) at high frequencies,
the charge pump being configured in cooperation with the further inductor (112) and the voltage-limiting element (114) to transfer a discharge current of the pump capacitor (111) into the storage capacitor (115) during operation of the DC-DC converter.

2. The circuit according to claim 1, wherein the freewheeling diode (113) is conductive before the negative edge of the supply signal when this supply signal has a low frequency.

3. The circuit according to claim 2, wherein the low frequencies are in a range from 25 kHz to 45 kHz.

4. The circuit according to any of the preceding claims 1 to 3, wherein, at average frequencies of the supply signal, the freewheeling diode (113) switches on simultaneously or substantially simultaneously with the negative edge of the supply signal.

5. The circuit according to claim 4, wherein the average frequencies are in a range from 60 kHz to 120 kHz.

6. The circuit according to any of the preceding claims 1 to 5, wherein, at high frequencies of the supply signal, the freewheeling diode (113) is nonconductive with the rising edge of the supply signal.

7. The circuit according to claim 6, wherein the high frequencies are in a range from 150 kHz to 300 kHz.

8. The circuit according to claim 1, wherein the voltage-limiting element (114) comprises a Zener diode.

9. A DC-DC converter comprising the circuit according to any of the preceding claims 1 to 8.

10. The DC-DC converter according to claim 9, comprising a converter inductor having an inductive tap, **characterized in that** the inductive tap (110) comprises an auxiliary winding.

11. The DC-DC converter according to any of the preceding claims, wherein the DC-DC converter is configured to carry out a line-side power factor correction.

12. The DC-DC converter according to any of the preceding claims 9 to 11, wherein a ratio between an output voltage of the DC-DC converter to its input voltage varies by more than 1 to 2.

13. The DC-DC converter according to any of the preceding claims 9 to 12, wherein a voltage transformation of the DC-DC converter varies by more than a ratio of 1 to 10.

14. The DC-DC converter according to any of the preceding claims 9 to 13, wherein the load voltage of the DC-DC converter is less than a peak value of the input voltage of the DC-DC converter.

15. The DC-DC converter according to any of the preceding claims 9 to 14, wherein the DC-DC converter has a SEPIC topology.

16. The DC-DC converter according to any of the preceding claims 9 to 15, wherein a load circuit of the DC-DC converter is galvanically isolated from an input circuit of the DC-DC converter.

17. The DC-DC converter according to any of the preceding claims 9 to 16, wherein at least one light-emitting diode can be connected to the DC-DC converter as a load.

18. An operating device for at least one lamp, comprising a DC-DC converter according to any of claims 9 to 17.

## Revendications

1. Circuit destiné à générer une tension auxiliaire dans un convertisseur de tension continue cadencé comportant une large plage de fréquences et/ou de tension de son signal utile, présentant :
- une entrée (101, Masse) destinée à injecter un signal d'alimentation qui peut être découplé au moyen d'un condensateur de pompage (111) en tant que tension alternative entre une prise de tension inductive (110) au niveau de l'inductance du convertisseur de tension continue et un potentiel de référence,
- une pompe de charge, la pompe de charge comprenant le condensateur de pompage (111), une diode de roue libre (113) et une diode de pompage (116), le condensateur de pompage (111) et la diode de roue libre (113) étant commutés en série et commutables entre la prise de tension inductive (110) et le potentiel de référence, la diode de pompage (116) étant couplée à l'aide d'un noeud (102) entre le condensateur de pompage (111) et la diode de roue libre (113),
- une sortie (104, Masse) comportant un condensateur de stockage (115) destiné à délivrer la tension auxiliaire, le condensateur de stockage (115) étant commuté en parallèle de la sortie pour le stockage de la tension auxiliaire et la tension auxiliaire étant appliquée en cours d'utilisation entre le noeud de sortie (104) et le potentiel de référence,
- un élément limitant la tension (114), qui est commuté en parallèle du condensateur de stockage, destiné à limiter la hauteur de la tension auxiliaire,
- une autre inductance (112), qui est commutée entre le noeud (102) du condensateur de pompage (111) et la diode de roue libre (113) ainsi que la diode de pompage (116), pour limiter le courant de décharge du condensateur de pompage (111) lors du fonctionnement du convertisseur de tension continue en cas de fréquences élevées et décharger l'élément limitant la tension (114) en cas de fréquences élevées,
la pompe de charge étant conçue, en coopération avec l'autre inductance (112) et l'élément limitant la tension (114), pour transférer un courant de décharge du condensateur de pompage (111) dans le condensateur de stockage (115) lors du fonctionnement du convertisseur de tension continue.

2. Circuit selon la revendication 1, dans lequel la diode de roue libre (113) devient conductrice avant le flanc négatif du signal d'alimentation, lorsque ce signal d'alimentation présente une basse fréquence.

3. Circuit selon la revendication 2, dans lequel les basses fréquences se situent dans une plage de 25 kHz à 45 kHz.

4. Circuit selon l'une des revendications précédentes 1 à 3, dans lequel, dans le cas de fréquences moyennes du signal d'alimentation, la diode de roue libre (113) s'active simultanément ou de manière sensiblement simultanée avec le flanc négatif du signal d'alimentation.

5. Circuit selon la revendication 4, dans lequel les fréquences moyennes se situent dans une plage de 60 kHz à 120 kHz.

6. Circuit selon l'une des revendications précédentes 1 à 5, dans lequel, dans le cas de fréquences élevées du signal d'alimentation, la diode de roue libre (113) devient bloquante avec le flanc ascendant du signal d'alimentation.

7. Circuit selon la revendication 6, dans lequel les fréquences élevées se situent dans une plage de 150 kHz à 300 kHz.

8. Circuit selon la revendication 1, dans lequel l'élément limitant la tension (114) comprend une diode Zener.

9. Convertisseur de tension continue comprenant le circuit selon l'une des revendications précédentes 1 à 8.

10. Convertisseur de tension continue selon la revendication 9, présentant une inductance de convertisseur comportant une prise de tension inductive, **caractérisé en ce que** la prise de tension inductive (110) comprend une bobine auxiliaire.

11. Convertisseur de tension continue selon l'une des revendications précédentes, dans lequel le convertisseur de tension continue est conçu pour effectuer une correction de facteur de puissance côté réseau.

12. Convertisseur de tension continue selon l'une des revendications précédentes 9 à 11, dans lequel un rapport entre une tension de sortie du convertisseur de tension continue à sa tension d'entrée varie de plus de 1 à 2.

13. Convertisseur de tension continue selon l'une des revendications précédentes 9 à 12, dans lequel une démultiplication de tension du convertisseur de tension continue varie de plus d'un rapport de 1 à 10.

14. Convertisseur de tension continue selon l'une des revendications précédentes 9 à 13, dans lequel la tension de charge du convertisseur de tension continue est inférieure à une valeur de crête de la tension d'entrée du convertisseur de tension continue.

15. Convertisseur de tension continue selon l'une des revendications précédentes 9 à 14, dans lequel le convertisseur de tension continue présente une topologie de SEPIC.

16. Convertisseur de tension continue selon l'une des revendications précédentes 9 à 15, dans lequel un circuit de charge du convertisseur de tension continue est isolé galvaniquement d'un circuit d'entrée du convertisseur de tension continue.

17. Convertisseur de tension continue selon l'une des revendications précédentes 9 à 16, dans lequel au moins une diode électroluminescente peut être connectée en tant que charge au convertisseur de tension continue.

18. Appareil de fonctionnement pour au moins une lampe comprenant un convertisseur de tension continue selon l'une des revendications 9 à 17.
